# EUROPÄISCHE PATENTSCHRIFT

(11) **EP 1 965 567 B1**
(45) Veröffentlichungstag und Bekanntmachung des Hinweises auf die Patenterteilung: **18.12.2013**
(21) Anmeldenummer: 08003079.4
(22) Anmeldetag: 20.02.2008
(51) Int. Cl.: H04L 29/08, H04W 4/02, H04W 84/04

(54) **Übertragung von Medienobjekten zwischen Kommunikationspartnern in Funknetzen**
Transmission of media objects between communication partners in radio communication networks
Transmission d'objets de média entre des partenaires de communication dans des réseaux de communication radio

(30) Priorität: 27.02.2007 DE 102007009801
(43) Veröffentlichungstag der Anmeldung: 03.09.2008
(73) Patentinhaber: Vodafone Holding GmbH, 40213 Düsseldorf (DE)
(72) Erfinder: Legionnet-Klees, Gisele, 40479 Düsseldorf (DE); Degen, Helmut, 40470 Düsseldorf (DE)
(74) Vertreter: Weisbrodt, Bernd

(56) Entgegenhaltungen:
- US-A1- 2005 138 138
- US-A1- 2006 092 890
- US-A1- 2006 246 927
- AGRAWAL D ET AL: "Issues in integrating cellular networks, wlans, and manets: a futuristic heterogeneous wireless network" IEEE PERSONAL COMMUNICATIONS, IEEE COMMUNICATIONS SOCIETY, US, Bd. 12, Nr. 3, 1. Juni 2005 (2005-06-01), Seiten 30-41, XP011134873 ISSN: 1070-9916

## Beschreibung

Die vorliegende Erfindung betrifft ein Verfahren gemäß Anspruch 1 zur zumindest teilautomatischen Übertragung von Medienobjekten zwischen Kommunikationspartnern in Kommunikationsnetzen, vorzugsweise Telekommunikationsnetzen, wie Mobilfunknetzen gemäß einem GSM-, GPRS- und/oder UMTS-Funknetzstandard und/oder IP-Netzwerken, mittels wenigstens eines Kommunikationsdienstes eines Telekommunikationsnetzes.

Gegenstand der vorliegenden Erfindung ist ferner ein Endgerät zur Nutzung in einem Kommunikationsnetz, vorzugsweise einem Telekommunikationsnetz, wie einem Mobilfunknetz gemäß einem GSM-, GPRS- und/oder UMTS-Funknetzstandard und/oder einem IP-Netzwerk, welches ausgebildet und/oder eingerichtet ist, ein erfindungsgemäßes Verfahren auszuführen.

Im Stand der Technik sind verschiedene Systeme, Verfahren und Vorrichtungen zur Übertragung von Medienobjekten, insbesondere Bilder, Videos, Text, Dokumente, URLs, Nachrichten und/oder dergleichen, in einem Kommunikationsnetz, insbesondere einem Telekommunikationsnetz wie einem Mobilfunknetz gemäß einem GSM- (GSM: Global System Mobile), GPRS-(General Paket Radio Service) und/oder UMTS-Funknetzstandard (UMTS: Universal Mobile Telecommunications. System) mittels SMS, SMS over IP, MMS, MMS over IP, Instant Messaging (IM), E-Mail, Bluetooth, WLAN, Infrarot und/oder IP Transfer als Kommunikationsdienst des Telekommunikationsnetzes bekannt.

Ein derartiges Verfahren wird z.B. in US 2006/0246927 offenbart.

Bisher wird bei den bekannten Systemen, Verfahren und Vorrichtungen zur Übertragung von Medienobjekten eine gleichzeitige Nutzung unterschiedlicher Kommunikationsdienste für die Medienobjektübertragung zwischen Kommunikationspartnern, also zwischen Sendern und Empfängern von Medienobjekten, nicht ermöglicht.

Ferner erfolgt bisher keine Berücksichtigung von individuellen und/oder situationsabhängigen Präferenzen der jeweiligen Kommunikationspartner bezüglich der Übertragung beziehungsweise des Empfangs von Medienobjekten, wie beispielsweise Verfügbarkeit von Empfangsgeräten, räumlichem Abstand zwischen Empfangsgerät und Sendegerät, bevorzugte Kommunikationsdienste von Sendern und/oder Empfängern und/oder dergleichen individuellen und/oder situationsabhängigen Präferenzen der Kommunikationspartner.

Der Erfindung liegt in Anbetracht dieses Standes der Technik die Aufgabe zugrunde, die Übertragung von Medienobjekten zwischen Kommunikationspartnern in Kommunikationsnetzen zu verbessern, insbesondere hinsichtlich der Nutzbarkeit von Kommunikationsdiensten selbst, als auch hinsichtlich einer Berücksichtigung von individuellen und/oder situationsabhängigen Präferenzen.

Zur technischen Lösung wird mit der vorliegenden Erfindung ein Verfahren zur zumindest teilautomatischen Übertragung von Medienobjekten zwischen Kommunikationspartnern in Kommunikationsnetzen, vorzugsweise Telekommunikationsnetzen wie Mobilfunknetzen gemäß einem GSM-, GPRS- und/oder UMTS-Funknetzstandard und/oder IP-Netzwerken, mittels wenigstens eines Kommunikationsdienstes eines Kommunikationsnetzes vorgeschlagen, welches dadurch gekennzeichnet ist, dass der wenigstens eine Kommunikationsdienst für die Übertragung wenigstens eines Medienobjektes in Abhängigkeit von dem Medienobjekt, dem Aufenthaltsort der Kommunikationspartner in einem Kommunikationsnetz und/oder den gerätespezifischen Eigenschaften der von den jeweiligen Kommunikationspartnern in dem jeweiligen Kommunikationsnetz genutzten Endgeräte bestimmt wird.

Der Erfindung liegt die Erkenntnis zugrunde, dass eine verbesserte Übertragung von Medienobjekten zwischen Kommunikationspartnern in Kommunikationsnetzen insbesondere hinsichtlich der Nutzbarkeit von Kommunikationsdiensten selbst als auch hinsichtlich einer Berücksichtigung von individuellen und/oder situationsabhängigen Präferenzen erzielbar ist, wenn der für die Medienobjektübertragung verwendete Kommunikationsdienst in Abhängigkeit von dem Medienobjekt, dem Aufenthaltsort der jeweiligen Kommunikationspartner in einem Kommunikationsnetz und/oder den gerätespezifischen Eigenschaften der Endgeräte der Kommunikationspartner in dem Kommunikationsnetz bestimmt wird. Erfindungsgemäß wird dem Nutzer damit quasi ein Werkzeug zur Verfügung gestellt, welches eine Medienobjektübertragung für den Nutzer zumindest teilautomatisch unter Berücksichtigung von individuellen und/oder situationsabhängigen Präferenzen berücksichtigt und die Medienübertragung entsprechend managt beziehungsweise organisiert.

Gemäß einer vorteilhaften Ausgestaltung der Erfindung werden im Rahmen der Bestimmung des Kommunikationsdienstes in der Person des Empfängers und/oder in der Person des Senders des wenigstens einen Medienobjektes begründete Eigenschaften - sogenannte nutzerindividuelle Präferenzen - und/oder in der Kommunikationssituation der Person des Empfängers und/oder in der Person des Senders des wenigstens einen Medienobjektes begründete Eigenschaften - sogenannte situationsabhängige Präferenzen - berücksichtigt. Als nutzerindividuelle Präferenzen können vorteilhafterweise insbesondere von Sendern und/oder Empfängern bevorzugte Kommunikationsdienste für die Medienobjektübermittlung, Empfangs-, Sende- und/oder Formatvorlieben von Empfängern und/oder Sendern von Medienobjekten und/oder dergleichen Eigenschaften berücksichtigt werden. Als situationsabhängige Präferenzen können vorteilhafterweise insbesondere die Verfügbarkeit von Endgeräten von Empfängern im Kommunikationsnetz, der räumliche Abstand des Endgerätes eines Empfängers zu einem Endgerät eines Senders im Kommunikationsnetz und/oder dergleichen Eigenschaften berücksichtigt werden.

Vorteilhafterweise wird das wenigstens eine Medienobjekt automatisch mit dem wenigstens einen bestimmten Kommunikationsdienst übertragen. Erfindungsgemäß ist dabei vorgesehen, dass nach einer erfindungsgemäßen Bestimmung eines Kommunikationsdienstes für die Medienobjektübertragung unter Berücksichtigung der individuellen und/oder situationsabhängigen Präferenzen das entsprechende Medienobjekt automatisch mit dem Kommunikationsdienst übertragen wird. Für den Nutzer, vorliegend insbesondere einem Sender eines entsprechenden Medienobjektes, wird so erfindungsgemäß eine weitere Vereinfachung hinsichtlich der Medienobjektübertragung erzielt, insbesondere derart, dass seitens eines entsprechenden Endgerätes des Senders weniger Tasten und/oder Aktivierungseingaben zur Medienobjektübertragung erforderlich sind.

Eine weitere vorteilhafte Ausgestaltung der Erfindung sieht vor, dass das wenigstens eine Medienobjekt nach Betätigungseingabe durch den Sender des wenigstens einen Medienobjektes mit dem wenigstens einen bestimmten Kommunikationsdienst übertragen wird. Erfindungsgemäß ist dabei vorteilhafterweise lediglich eine Einmalbetätigung durch den sich als Sender betätigenden Nutzer seitens eines entsprechend von diesem genutzten Endgerätes erforderlich, vorzugsweise eine Tastenbetätigung. Alternativ und/oder ergänzend kann als Betätigungseingabe auch eine Spracheingabe Verwendung finden.

Eine weitere vorteilhafte Ausgestaltung der Erfindung ist gekennzeichnet durch eine Datenbank mit verfügbaren und/oder bevorzugten Kommunikationsdiensten für die Übertragung für wenigstens ein Medienobjekt, einen Sender und/oder einen Empfänger, wobei die Datenbank vorteilhafterweise im Rahmen der erfindungsgemäßen Bestimmung des Kommunikationsdienstes genutzt wird. Die Datenbank ist dabei vorteilhafterweise seitens des Kommunikationsnetzes, vorzugsweise seitens einer von dem Kommunikationsnetz genutzten Einrichtung beziehungsweise über dieses zugänglichen Recheneinrichtung, und/oder seitens des Endgerätes des jeweiligen Nutzers vorgesehen und eingerichtet.

Eine weitere vorteilhafte Ausgestaltung der Erfindung sieht vor, dass ein von dem Sender und/oder dem Empfänger eines Medienobjektes bevorzugter Kommunikationsdienst für die Übertragung wenigstens eines Medienobjektes die Bestimmung des Kommunikationsdienstes dominiert. Die Bestimmung des Kommunikationsdienstes für die Medienobjektübertragung wird dabei erfindungsgemäß vorteilhafterweise derart durchgeführt, dass im Falle einer Nutzung von sich widersprechenden beziehungsweise widerstreitenden Kommunikationsdiensten wenigsten ein die Bestimmung des Kommunikationsdienstes vorgebendes Auswahlkriterium eingehalten wird. Ist zum Beispiel das Endgerät eines Empfängers nicht in der Lage ein bestimmtes Medienobjekt und/oder einen bestimmten Kommunikationsdienst nicht nutzen zu können, werden diese Umstände im Rahmen der Bestimmung des Kommunikationsdienstes für die Medienobjektübertragung seitens des Senders und/oder seitens des Netzwerkes berücksichtigt und entweder ein entsprechend anderer Kommunikationsdienst, eine Konvertierung des Medienobjektes in ein anderes Medienobjektformat und/oder ein Kommunikationsdialog, der den Sender und/oder den Empfänger auf die Problematik der Nichtnutzbarkeit des Medienobjektes und/oder des Kommunikationsdienstes seitens des Empfängers informiert ausgelöst. Eine weitere vorteilhafte Ausgestaltung der Erfindung sieht vor, dass der Sender eines Medienobjektes den Kommunikationsdienst für die Übertragung wenigstens eines Medienobjektes dominierend bestimmt. So wird dem Sender erfindungsgemäß die Möglichkeit eingeräumt, vorzugeben, welcher Kommunikationsdienst für die Medienobjektübertragung genutzt werden soll, beispielsweise um in der Person des Senders liegende nutzerindividuelle Kommunikationskriterien zu erfüllen, beispielsweise zum Aufbrauchen von bestehenden und/oder frei verfügbaren Kontingenten für Kommunikationsdienste wie SMS, MMS und/oder zum Aufbrauchen von Datenvolumen für die Medienobjektübertragung.

Eine weitere vorteilhafte Ausgestaltung der Erfindung sieht vor, dass der Empfänger eines Medienobjektes den Kommunikationsdienst für die Übertragung wenigstens eines Medienobjektes dominierend bestimmt.

Eine bevorzugte Ausgestaltung der Erfindung ist gekennzeichnet durch die Versendung einer Nachricht an den Sender und/oder den Empfänger des Medienobjektes mittels eines Nachrichtendienstes des Kommunikationsnetzes zur Bestätigung und/oder Benachrichtigung der Übertragung eines Medienobjektes mittels des Kommunikationsdienstes des Kommunikationsnetzes, vorzugsweise mittels eines von dem Kommunikationsdienst des Kommunikationsnetzes für die Medienobjektübertragung abweichenden Nachrichtendienst des Kommunikationsnetzes. Erfindungsgemäß wird so vorteilhafterweise eine zusätzliche Nachricht verschickt, um den Sender und/oder den Empfänger über eine Medienobjektübertragung als Ereignis zu informieren. Vorteilhafterweise erfolgt die Übertragung einer entsprechenden Bestätigungs- und/oder Benachrichtigungsnachricht manuell und/oder automatisch, wobei bei einer automatischen Nachrichtenversendung der entsprechende Nutzer vorteilhafterweise vorher die Art und Weise der Übertragung als auch die Form und den Kontext der Übertragung der Bestätigungs- und/oder Benachrichtigungsnachricht vorgeben beziehungsweise einstellen kann.

In einer weiteren vorteilhaften Ausgestaltung der Erfindung werden Kommunikationsdienste zur Übertragung von Medienobjekten nacheinander, parallel und/oder zumindest teilweise nacheinander und/oder parallel benutzt. Erfindungsgemäß können so vorteilhafterweise in Abhängigkeit der dem jeweiligen Sender und/oder Empfänger zur Verfügung stehenden Kommunikationsdienste entsprechend den gegebenen Möglichkeiten und/oder den individuellen und/oder situationsabhängigen Präferenzen von Sender und/oder Empfänger berücksichtigend folgend genutzt. Erfindungsgemäß ist so insbesondere eine optimierte Auslastung des Kommunikationsnetzes beziehungsweise der von dem Kommunikationsnetz zur Verfügung gestellten Kommunikationsdienste erzielbar. Eine besonders bevorzugte Ausgestaltung der Erfindung sieht vor, dass die Nutzung der Kommunikationsdienste zur Medienobjektübertragung von dem jeweiligen Nutzer hinsichtlich der Nutzungsart vorgebbar ist. Der Nutzer erhält so erfindungsgemäß die Möglichkeit entsprechend seinen Präferenzen auszuwählen und/oder vorzugeben, wie welches Medienobjekt an welchem Medienobjektempfänger hinsichtlich der zeitlichen Rheinfolge und/oder eine sonstige Priorisierung berücksichtigend erfolgen soll. So kann ein Sender beispielsweise vorgeben, welche Empfänger ein Medienobjekt nacheinander und welche Empfänger ein Medienobjekt parallel erhalten sollen. Vorteilhafterweise sind hier von dem entsprechenden Nutzer auch Gruppierungen hinsichtlich einer nacheinander und/oder parallel erfolgenden Übertragung oder Nutzung der Kommunikationsdienste vorgebbar.

Bevorzugte Ausgestaltungen des erfindungsgemäßen Verfahrens sind gekennzeichnet durch SMS, SMS over IP, MMS, MMS over IP, Instant Messaging (IM), E-Mail, Bluetooth, WLAN, Infrarot, IP Transfer und/oder Nahfunktechnik (NFC: Near Field Communication) als Kommunikationsdienst des Kommunikationsnetzes. Eine weitere Ausgestaltung der Erfindung ist gekennzeichnet durch Bilder, vorzugsweise Fotos, Videos, Text, Dokumente, URLs (URL: Uniform Resource Locator) und/oder Nachrichten als Medienobjekt.

Gegenstand der vorliegenden Erfindung ist ferner ein Netzknoten in einem Kommunikationsnetz, vorzugsweise einem Telekommunikationsnetz wie einem Mobilfunknetz gemäß einem GSM-, GPRS- und/oder UMTS-Funknetzstandard und/oder einem IP-Netwerk, welcher an der Übertragung von Medienobjekten in dem Kommunikationsnetz mittels eines Kommunikationsdienstes des Kommunikationsnetzes beteiligt ist, welcher ausgebildet und/oder eingerichtet ist, ein erfindungsgemäßes Verfahren zumindest teilweise auszuführen.

Ferner ist Gegenstand der vorliegenden Erfindung ein Endgerät zur Nutzung in einem Kommunikationsnetz, vorzugsweise einem Telekommunikationsnetz wie einem Mobilfunknetz gemäß einem GSM-, GPRS- und/oder UMTS-Funknetzstandard und/oder einem IP-Netzwerk, welches ausgebildet und/oder eingerichtet ist, ein erfindungsgemäßes Verfahren zumindest teilweise auszuführen. Eine bevorzugte Ausgestaltung der Erfindung sieht vor, dass das Endgerät ein in einem Mobilfunknetz betreibbares mobiles Endgerät, vorzugsweise in Form eines Mobilfunktelefons, ist.

Weitere Einzelheiten, Merkmale und Vorteile der Erfindung werden nachfolgend anhand des in der Figur der Zeichnung dargestellten Ausführungsbeispiels der Erfindung näher erläutert. Dabei zeigt:

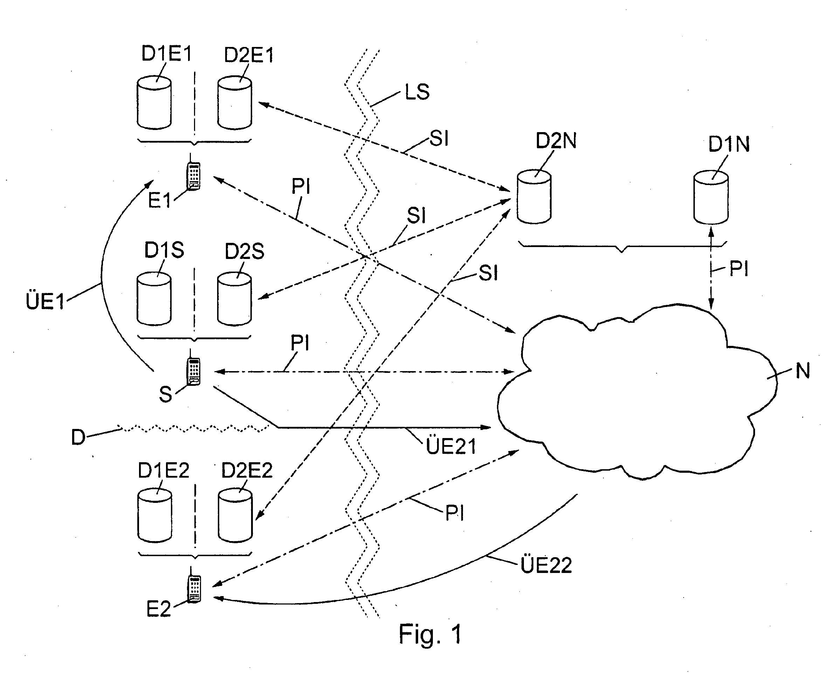

- Fig. 1: in einer schematischen Prinzipdarstellung ein Ausführungsbeispiel einer erfindungsgemäßen Medienobjektübertragung.

Fig. 1 zeigt in einer schematischen Prinzipdarstellung ein Ausführungsbeispiel einer erfindungsgemäßen Übertragung von Medienobjekten zwischen Kommunikationspartnern S, E1 und E2 in einem Kommunikationsnetz N. Bei dem Kommunikationsnetz N handelt es sich vorliegend um ein Mobilfunknetz gemäß einem GSM-, GPRS- und/oder UMTS-Funknetzstandard. Kommunikationsverbindungen zwischen Kommunikationspartnern S, E1 und E2 sowie dem Kommunikationsnetz N selbst erfolgen dabei unter Nutzung von Einrichtungen, Endgeräten und/oder Protokollen gemäß dem GSM-, GPRS- und/oder UMTS-Funknetzstandard.

Die Kommunikationspartner S, E1 und E2 nutzen vorliegend jeweils in dem Kommunikationsnetz N nutzbare Endgeräte S, E1 und E2, welche vorliegend als in dem Mobilfunknetz betreibbare mobile Endgeräte in Form von Mobilfunktelefonen ausgebildet sind. Mit S ist vorliegend der Sender als auch das Endgerät des Senders von zu übertragenden Medienobjekten gekennzeichnet. Mit E1 beziehungsweise E2 sind vorliegend zwei Empfänger als auch deren Endgeräte von zu empfangenden Medienobjekten des Senders S gekennzeichnet.

Die Endgeräte S, E1 und E2 des Senders und der Empfänger weisen vorliegend jeweils eine erste Datenbank D1S, D1E1 und D1E2 auf, in welcher nutzerindividuelle Informationen von Kommunikationspartnern, insbesondere Informationen von Sendern und/oder Empfängern bezüglich Kontaktinformationen in Kommunikationsnetzen, gesendeten und/oder empfangenden Medienobjekten, Vorlieben, insbesondere bezüglich Kommunikationsverbindungen und/oder Medienobjekten und/oder dergleichen Informationen für die Medienobjektübertragung erfasst sind. Die Datenbankeinträge in den ersten Datenbanken D1S, D1E1 und D1E2 sind vorliegend seitens des Endgerätes S, E1 beziehungsweise E2 gespeichert und von seitens des jeweiligen Endgerätes S, E1, E2 vorhandenen beziehungsweise ausführbaren Anwendungen für die Medienobjektübertragung entsprechend nutzbar.

Weiter weisen die Endgeräte S, E1 und E2 vorliegend eine zweite Datenbank D2S, D2E1 und D2E2 auf, in welcher vorliegend Informationen von Kommunikationspartnern erfasst sind, welche orts- und situationsabhängigen Änderungen unterliegen. Entsprechende Informationen der zweiten Datenbanken D2S, D2E1 und D2E2 umfassen beispielsweise Aufenthaltsinformationen von gewünschten Kommunikationspartnern, Erreichbarkeits- und/oder Verfügbarkeitsinformationen von entsprechenden Kommunikationspartnern oder dergleichen Statusinformationen. Entsprechende Statusinformationen werden in den zweiten Datenbanken D2S, D2E1 und D2E2 über das Kommunikationsnetz N erfasst und ausgetauscht.

Seitens des Kommunikationsnetzes N ist wenigstens eine entsprechende zweite Datenbank D2N vorgesehen, welche zum einen den Aufenthaltsort von Kommunikationspartnern S, E1 beziehungsweise E2 in dem Kommunikationsnetz N oder einem anderen Kommunikationsnetz erfasst und dem jeweiligen Nutzer S, E1 beziehungsweise E2 zur Verfügung gestellt. Weiter können in der zweiten Datenbank D2N des Kommunikationsnetzes N von den jeweiligen Nutzern S, E1 beziehungsweise E2 Erreichbarkeits- und/oder sonstige Statusinformationen hinterlegt werden, so dass das Kommunikationsnetz N entsprechend den anderen Kommunikationspartnern entsprechende Erreichbarkeits-, Verfügbarkeits- und/oder Statusinformationen in den jeweiligen zweiten Datenbanken D2S, D2E1 beziehungsweise D2E2 der Endgeräte S, E1 beziehungsweise E2 zur Verfügung stellen kann. Entsprechende Kommunikationsverbindungen für Statusinformationen zwischen dem Kommunikationsnetz N und den jeweiligen Endgeräten S, E1 und E2 beziehungsweise den jeweiligen seitens der Endgeräte S, E1 und E2 vorgesehenen zweiten Datenbanken D2S, D2E1 und D2E2 sind in Fig. 1 durch die mit SI gekennzeichneten Doppelpfeile symbolisch dargestellt.

Die Kommunikationspartner S, E1, E2 können seitens der entsprechenden Endgeräte S, E1, E2 in den ersten Datenbanken D1S, D1E1 und D1E2 erfassten Informationen, insbesondere Präferenzen hinsichtlich der Medienobjektübertragung und/oder dergleichen Informationen der ersten Datenbanken D1S, D1E1 und D1E2 vorteilhafterweise in einer seitens des Kommunikationsnetzes N dafür eingerichteten und vorgesehenen ersten Datenbank D1N verwalten. Entsprechende Informationen beziehungsweise Einträge in den ersten Datenbanken D1S, D1E1 und D1E2 sind über die in Fig. 1 mit PI gekennzeichneten Doppelpfeile zwischen der ersten Datenbank D1N des Kommunikationsnetzes N und den jeweiligen ersten Datenbanken D1S, D1E1 und D1E2 der Endgeräte S, E1 und E2 über das Kommunikationsnetz austauschbar. Vorteilhafterweise werden für die Kommunikationsverbindung Pl, Kommunikationsdienste des Kommunikationsnetzes N genutzt.

In einem Vorbereitungsschritt haben die Kommunikationspartner als Sender S oder Empfänger E1 beziehungsweise E2 seitens ihrer jeweiligen Endgeräte S, E1, E2 in den ersten Datenbanken D1S, D1E1 und D1E2 für die verschiedenen Empfänger von Medienobjekten und für die verschiedenen Arten von Medienobjekten selbst verfügbare und/oder bevorzugte Kommunikationsdienste als Datenbankeinträge in einer entsprechenden Liste erfasst (priorisierte Liste). In den ersten Datenbanken D1S, D1E1 und D1E2 sind somit für die jeweiligen Kommunikationspartner der jeweiligen Nutzer der Endgeräte S, E1, E2 sowohl mögliche Kommunikationsdienste in Abhängigkeit des Medienobjektes als auch mögliche Kommunikationsdienste in Abhängigkeit von gerätespezifischen Eigenschaften der von den jeweiligen Kommunikationspartnern in dem jeweiligen Kommunikationsnetz genutzten Endgeräte erfasst und verwaltet.

Seitens des Endgerätes S eines Senders S wird in einem Ausführungsschritt ein zu übertragendes Medienobjekt aus einer hier nicht explizit dargestellten Datenbank des Endgerätes S ausgewählt und/oder mittels einer Anwendung seitens desselben erstellt beziehungsweise gestaltet, beispielsweise in Form einer Nachricht. Anschließend wählt der Sender S seitens des Endgerätes S die Empfänger E1, E2 des zu übertragenden Medienobjektes im Rahmen eines Anwendungsprogramms zur Medienobjektübertragung aus. Seitens des Endgerätes ist dabei eine Einrichtung vorgesehen, welche in Abhängigkeit des ausgewählten Empfängers E1 beziehungsweise E2 in der zweiten Datenbank D2S überprüft, ob die Empfänger im Kommunikationsnetz N verfügbar sind. Die Abfrage erfolgt dabei über die zweite Datenbank D2S, in welcher über die Datenbank D2S des Kommunikationsnetzes N Informationen bezüglich Verfügbarkeit und/oder Erreichbarkeit der ausgewählten Empfänger E1 beziehungsweise E2 gegeben ist. Dabei wird weiter überprüft, ob und welche Kommunikationsdienste für die jeweiligen Empfänger sowohl gerätetechnisch möglich als auch bevorzugt sind. Dem Sender des zu übertragenden Medienobjektes werden für die jeweiligen Empfänger bestimmte Kommunikationsdienste entweder zur Bestätigungsauswahl vorgeschlagen und/oder entsprechend automatisch für die Medienobjektübertragung genutzt. Die automatische Nutzung eines Kommunikationsdienstes für die Medienobjektübertragung ist dabei vorteilhafterweise seitens des jeweiligen Endgerätes des Senders auswählbar und/oder einstellbar, beispielsweise hinsichtlich einer Auswahl für bestimmte Empfänger und/oder Nutzungen von Kommunikationsdiensten.

Anschließend wird das entsprechende Medienobjekt in einem Abarbeitungsschritt in Form einer Nachricht über den bestimmten Kommunikationsdienst an die jeweiligen Empfänger E1 beziehungsweise E2 übersandt. Die Übertragung beziehungsweise Übersendung erfolgt dabei über den entsprechenden Kommunikationsdienst. Die Übertragung des Medienobjektes an die Empfänger E1 beziehungsweise E2 kann dabei nacheinander und/oder parallel erfolgen. Die Art und Weise der Übertragung nacheinander und/oder parallel kann dabei vorteilhafterweise in Abhängigkeit der zur Verfügung stehenden Kommunikationsdienste als auch entsprechend nutzerindividueller Vorgaben des Senders S erfolgen.

Bei dem in Fig. 1 dargestellten Ausführungsbeispiel will der Sender S ein Medienobjekt zum einen an den Empfänger E1 und zum anderen an den Empfänger E2 übertragen. Der Empfänger E1 befindet sich vorliegend in unmittelbarer Nähe zum Sender S, vorliegend innerhalb eines Nahfunkbereichs der eine Kommunikationsverbindung zwischen dem Endgerät S und dem Endgerät E1 mittels Bluetooth ermöglicht. Der Empfänger E2 befindet sich vorliegend in einem von dem Sender S entfernten Bereich, wie in Fig. 1 durch die mit D gekennzeichnete punktierte Linie symbolisch. Der Sender S und der Empfänger E2 befinden sich dabei vorliegend in unterschiedlichen Funkzellen des als Mobilfunknetz ausgebildeten Kommunikationsnetzes N und weisen dementsprechend andere Aufenthaltsorte im Kommunikationsnetz N auf.

Bei der Medienobjektübertragung wird seitens des Endgerätes S im Rahmen der Bestimmung des zu verwendenden Kommunikationsdienstes für die Medienobjektübertragung durch Abfrage von Statusinformationen aus der zweiten Datenbank D2S erfasst, dass sich der Empfänger E1 in unmittelbarer Nähe des Senders S befindet. Weiter wird aus der ersten Datenbank D1S und/oder aus der zweiten Datenbank D2S erfasst, dass eine Medienobjektübertragung unter Nutzung des Kommunikationsdienstes Bluetooth zwischen dem Endgerät S und dem Endgerät E1 ermöglicht ist. Entsprechend wird seitens des Endgerätes S für die Medienobjektübertragung automatisch eine Bluetoothverbindung ausgewählt und das Medienobjekt von dem Endgerät S an das Endgerät E1 mittels Bluetooth übertragen. Die Übertragung mittels des Kommunikationsdienstes Bluetooth zwischen dem Endgerät S und dem Endgerät E1 ist in Fig. 1 durch den mit ÜE21 gekennzeichneten Pfeil dargestellt.

Bei der Medienobjektübertragung an den Empfänger E2 wird seitens des Endgerätes S im Rahmen der Bestimmung des Kommunikationsdienstes für die Medienobjektübertragung durch Auswertung beziehungsweise Überprüfung der Informationen in der zweiten Datenbank D2S und/oder ersten Datenbank D1S festgestellt, dass dieser über das Kommunikationsnetz N mittels eines entsprechenden Kommunikationsdienstes, vorliegend beispielsweise mittels SMS oder MMS möglich ist. Entsprechend wird das Medienobjekt von dem Endgerät S zunächst an das Kommunikationsnetz N übertragen, in Fig. 1 in dem mit ÜE21 gekennzeichneten Pfeil dargestellt. Von dem Kommunikationsnetz N wird das Medienobjekt dann an das Endgerät E2 des Empfängers E2 unter Nutzung des entsprechenden Kommunikationsdienstes weitergeleitet, wie in Fig. 1 mit ÜE22 gekennzeichneten Pfeil dargestellt.

In einem anschließenden, in Fig. 1 nicht explizit dargestellten Ergebnisschritt wird der Sender S von dem Kommunikationsnetz N über die erfolgreiche Übertragung des Medienobjektes an die jeweiligen Empfänger E1 bzw. E2 informiert, vorzugsweise mit einer Bestätigungs- und/oder Benachrichtigungsnachricht mittels eines Nachrichtendienstes des Kommunikationsnetzes N, insbesondere mittels SMS.

Das in der Figur der Zeichnung dargestellte und im Zusammenhang mit diesem beschriebene Ausführungsbeispiel der Erfindung dient lediglich der Erläuterung der Erfindung und ist für diese nicht beschränkend.

### Bezugszeichenliste

- S: Sender/Endgerät (Sender)
- E1: Empfänger/Endgerät (Empfänger)
- E2: Empfänger/Endgerät (Empfänger)
- N: Kommunikationsnetz/Mobilfunknetz
- D1S: Datenbank (Endgerät (S))
- D2S: Datenbank (Endgerät (S))
- D1 E1: Datenbank (Endgerät (E1))
- D2E1: Datenbank (Endgerät (E1))
- D1 E2: Datenbank (Endgerät (E2))
- D2E2: Datenbank (Endgerät (E2))
- D1N: Datenbank (Kommunikationsnetz (N))
- D1N: Datenbank (Kommunikationsnetz (N))
- LS: Schnittstelle (Kommunikationsnetz (N) <=> Endgerät (S, E1, E2))
- D: Trennlinie (Aufenthaltsorte (Endgerät (S), Endgerät (E2)))
- PI: Kommunikationsverbindung (Präferenzinformationen)
- SI: Kommunikationsverbindung (Statusinformationen)
- ÜE1: Medienobjektübertragung/Bluetoothverbindung (Endgerät (S) <=> Endgerät (E1))
- ÜE21: Medienobjektübertragung/Kommunikationsnetzverbindung (Endgerät (S) <=> Kommunikationsnetz (N))
- ÜE22: Medienobjektübertragung/Kommunikationsnetzverbindung (Kommunikationsnetz (N) <=> Endgerät (E2))

## Patentansprüche

1. Verfahren zur zumindest teilautomatischen Übertragung von Medienobjekten zwischen Kommunikationspartnern (S, E1, E2) in
Telekommunikationsnetzen (**N**) wie Mobilfunknetzen gemäß einem GSM-, GPRS- und/oder UMTS-Funknetzstandard und/oder IP-IVetzwerken,
mittels wenigstens eines Kommunikationsdienstes **des Telekommunikationsnetzes (**N),
**wobei**
der wenigstens eine Kommunikationsdienst für die Übertragung wenigstens eines Medienobjektes in Abhängigkeit von dem Medienobjekt bestimmt wird, wobei
**der wenigstens eine Kommunikationsdienst für die Übertragung wenigstens eines Medienobjektes ferner in Abhängigkeit von** dem Aufenthaltsort der jeweiligen Kommunikationspartner (S, E1, E2) in einem **Telekommunikationsnetz** (N) und den gerätespezifischen Eigenschaften der von den jeweiligen Kommunikationspartnern (S, E1, E2) in dem **Telekommunikationsnetz** (N) genutzten Endgeräte (S, E1, E2)
bestimmt wird.

2. Verfahren nach Anspruch 1, **dadurch gekennzeichnet, dass** im Rahmen der Bestimmung des Kommunikationsdienstes in der Person des Empfängers (E1, E2) und/oder Senders (S) des wenigstens einen Medienobjektes begründete Eigenschaften (nutzerindividuelle Präferenzen) und/oder in der Kommunikationssituation der Person des Empfängers (E1, E2) und/oder Senders (S) des wenigstens einen Medienobjektes begründete Eigenschaften (situationsabhängige Präferenzen) berücksichtigt werden.

3. Verfahren nach Anspruch 1 oder Anspruch 2, **dadurch gekennzeichnet, dass** das wenigstens eine Medienobjekt automatisch mit dem wenigstens einen bestimmten Kommunikationsdienst übertragen wird.

4. Verfahren nach Anspruch 1 oder Anspruch 2, **dadurch gekennzeichnet, dass** das wenigstens eine Medienobjekt nach Bestätigungseingabe durch den Sender (S) des wenigstens einen Medienobjektes mit dem wenigstens einen bestimmten Kommunikationsdienst übertragen wird.

5. Verfahren nach einem der Ansprüche 1 bis 4, **gekennzeichnet durch** eine Datenbank (D1S, D1E1, D1E2, D2S, D2E1, D2E2) mit verfügbaren und/oder bevorzugten Kommunikationsdiensten für die Übertragung für wenigstens ein Medienobjekt, einen Sender (S) und/oder Empfänger (E1, E2), wobei die Datenbank (D1S, D1E1, D1E2, D2S, D2E1, D2E2) im Rahmen der Bestimmung des Kommunikationsdienstes genutzt wird.

6. Verfahren nach einem der Ansprüche 1 bis 5, **dadurch gekennzeichnet, dass** ein von dem Sender (S) und/oder dem Empfänger (E1, E2) eines Medienobjektes bevorzugter Kommunikationsdienst für die Übertragung wenigstens eines Medienobjektes die Bestimmung des Kommunikationsdienstes dominiert.

7. Verfahren nach einem der Ansprüche 1 bis 5, **dadurch gekennzeichnet, dass** der Sender (S) eines Medienobjektes den Kommunikationsdienst für die Übertragung wenigstens eines Medienobjektes dominierend bestimmt.

8. Verfahren nach einem der Ansprüche 1 bis 5, **dadurch gekennzeichnet, dass** der Empfänger (E1, E2) eines Medienobjektes den Kommunikationsdienst für die Übertragung wenigstens eines Medienobjektes dominierend bestimmt.

9. Verfahren nach einem der Ansprüche 1 bis 8, **gekennzeichnet durch** Versendung einer Nachricht an den Sender (S) und/oder Empfänger (E1, E2) des Medienobjektes mittels eines Nachrichtendienstes des **Telekommunikationsnetzes** (N) zur Bestätigung und/oder Benachrichtigung der Übertragung (ÜE1, ÜE21, ÜE22) eines Medienobjektes mittels des Kommunikationsdienstes des **Telekommunikationsnetzes** (**N**), vorzugsweise mittels eines von dem Kommunikationsdienst des **Telekommunikationsnetzes** (N) für die Medienobjektübertragung abweichenden Nachrichtendienst des **Telekommunikationsnetzes** (N).

10. Verfahren nach einem der Ansprüche 1 bis 9, **dadurch gekennzeichnet, dass** Kommunikationsdienste zur Übertragung von Medienobjektes nacheinander, parallel und/oder zumindest teilweise nacheinander und/oder parallel genutzt werden.

11. Verfahren nach einem der Ansprüche 1 bis 10, **gekennzeichnet durch** SMS, SMS over IP, MMS, MMS over IP, Instant Messaging (IM), E-Mail und/oder IP-Transfer
als Kommunikationsdienst des
**Telekommunikationsnetzes** (**N**).

12. Verfahren nach einem der Ansprüche 1 bis 11, **gekennzeichnet, durch** Bilder, Videos, Text, Dokumente, URLs und/oder Nachrichten als Medienobjekt.

13. Endgerät (S, E1, E2) zur Nutzung in einem Telekommunikationsnetz (**N**), wie einem Mobilfunknetz gemäß einem GSM-, GPRS- und/oder UMTS-Funknetzstandard und/oder einem IP-Netzwerk,
**dadurch gekennzeichnet, dass**
dieses ausgebildet und/oder eingerichtet ist ein Verfahren nach einem der Ansprüche 1 bis 12 auszuführen.

## Claims

1. A method for the at least partially automatic transmission of media objects between communication partners (S, E1, E2) in telecommunication networks (N) such as mobile radio networks according to the GSM, GPRS and/or UMTS radio network standard and/or IP networks by means of at least one communication service of the telecommunication network (N),
wherein
the at least one communication service for the transmission of at least one media object
is determined in dependence on the media object, wherein
the at least one communication service for the transmission of at least one media object is furthermore determined in dependence on the local position of the respective communication partners (S, E1, E2) in a telecommunication network (N) and
the terminal specific properties of the terminals which are used by the respective communication partners (S, E1, E2) in the telecommunication network (N).

2. A method according to claim 1, **characterized in that** within the scope of the determination of the communication service, properties related to the receiver (E1, E2) and/or sender (S) person of the at least one media object (user individual preferences) and/or properties related to the communication situation of the receiver (E1, E2) and/or sender (S) person of the at least one media object (situation dependent preferences) are considered.

3. A method according to claim 1 or claim 2, **characterized in that** the at least one media object is automatically transmitted by the at least one determined communication service.

4. A method according to claim 1 or claim 2, **characterized in that** the at least one media object will be transmitted by the at least one determined communication service after confirmation input by the sender (S) of the at least one media object.

5. A method according to one of the claims 1 through 4, **characterized by** a data base (D1S, D1E1, D1E2, D2S, D2E1, D2E2) comprising available and/or preferred communication services for the transmission for at least one media object, a sender (S) and/or receivers (E1, E2), wherein the data base (D1S, D1E1, D1E2, D2S, D2E1, D2E2) is used within the scope of the determination of the communication service.

6. A method according to one of the claims 1 through 5, **characterized in that** a communication service for the transmission of at least one media object, which service is preferred by the sender (S) and/or the receiver (E1, E2) of a media object, dominates the determination of the communication service.

7. A method according to one of the claims 1 through 5, **characterized in that** the sender (S) of a media object determines the communication service for the transmission of at least one media object in a dominating manner.

8. A method according to one of the claims 1 through 5, **characterized in that** the receiver (E1, E2) of a media object determines the communication service for the transmission of at least one media object in a dominating manner.

9. A method according to one of the claims 1 through 8, **characterized by** the sending of a message to the sender (S) and/or receiver (E1, E2) of the media object by means of a message service of the telecommunication network (N) for confirming and/or informing about the transmission (UE1, ÜE21, ÜE22) of a media object by means of the communication service of the telecommunication network (N), preferably by means of a message service of the telecommunication network (N) that is different from the communication service of the telecommunication network (N) for the transmission of the media object.

10. A method according to one of the claims 1 through 9, **characterized in that** communication services for the transmission of media objects are used one after the other, in parallel and/or at least partially one after the other and/or in parallel.

11. A method according to one of the claims 1 through 10, **characterized by** SMS, SMS over IP, MMS, MMS over IP, Instant Messaging (IM), e-mail and/or IP transfer as communication service of the telecommunication network (N).

12. A method according to one of the claims 1 through 11, **characterized by** images, videos, text, documents, URLs and/or messages as media object.

13. A terminal (S, E1, E2) for the use in a telecommunication network (N), such as a mobile radio network according to a GSM, GPRS and/or UMTS radio network standard and/or an IP network,
**characterized in that**
this one is designed and/or adapted to carry out a method according to one of the claims 1 through 12.

## Revendications

1. Procédé de transmission au moins partiellement automatique des objets de média entre des partenaires de communication (S, E1, E2) dans des réseaux de télécommunication (N) tels que des réseaux radio mobiles selon un standard radio mobile de GSM, de GPRS et/ou de UMTS et/ou des réseaux IP,
par moyen d'au moins un service de communication du réseau de télécommunication (N),
dans lequel
l'au moins un service de communication destiné à la transmission d'au moins un objet de média est déterminé en fonction de l'objet de média, dans lequel
l'au moins un service de communication destiné à la transmission d'au moins un objet de média est en outre déterminé en fonction de la position locale des partenaires de communication respectifs (S, E1, E2) dans un réseau de télécommunication (N) et
des propriétés spécifiques des terminaux (S, E1, E2) utilisés par les partenaires de communication respectifs (S, E1, E2) dans le réseau de télécommunication (N).

2. Procédé selon la revendication 1, **caractérisé en ce que** dans le contexte de la détermination du service de communication, des propriétés inhérentes à la personne du récepteur (E1, E2) et/ou de l'émetteur (S) de l'au moins un objet de média (des préférences individuelles de l'utilisateur) et/ou des propriétés inhérentes à la situation de communication de la personne du récepteur (E1, E2) et/ou de l'émetteur (S) de l'au moins un objet de média (des préférences dépendantes de la situation) sont considérées.

3. Procédé selon la revendication 1 ou la revendication 2, **caractérisé en ce que** l'au moins un objet de média est transmis automatiquement par moyen de l'au moins un service de communication déterminé.

4. Procédé selon la revendication 1 ou la revendication 2, **caractérisé en ce que** l'au moins un objet de média est transmis par moyen de l'au moins un service de communication déterminé après que l'émetteur (S) ait entré une confirmation.

5. Procédé selon l'une des revendications 1 à 4, **caractérisé par** une base de données (D1S, D1E1, D1E2, D2S, D2E1, D2E2) comprenant des services de communication disponibles et/ou préférés et destinés à la transmission pour au moins un objet de média, un émetteur (S) et/ou un récepteur (E1, E2), la base de donnés (D1S, D1E1, D1E2, D2S, D2E1, D2E2) étant utilisée dans le contexte de la détermination du service de communication.

6. Procédé selon l'une des revendications 1 à 5, **caractérisé en ce qu'**un service de communication destiné à la transmission d'au moins un objet de média qui est préféré par l'émetteur (S) et/ou par le récepteur (E1, E2) d'un objet de média domine la détermination du service de communication.

7. Procédé selon l'une des revendications 1 à 5, **caractérisé en ce que** l'émetteur (S) d'un objet de média détermine le service de communication destiné à la transmission d'au moins un objet de média de façon dominante.

8. Procédé selon l'une des revendications 1 à 5, **caractérisé en ce que** le récepteur (E1, E2) d'un objet de média détermine le service de communication destiné à la transmission d'au moins un objet de média de façon dominante.

9. Procédé selon l'une des revendications 1 à 8, **caractérisé par** l'envoi d'un message à l'émetteur (S) et/ou au récepteur (E1, E2) de l'objet de média par moyen d'un service de messages du réseau de télécommunication (N) pour confirmer et/ou informer sur la transmission (ÜE1, ÜE21, ÜE22) d'un objet de média par moyen du service de communication du réseau de télécommunication (N), de préférence par moyen d'un service de messages du réseau de télécommunication qui est différent du service de communication du réseau de télécommunication (N) qui est destiné à la transmission de l'objet de média.

10. Procédé selon l'une des revendications 1 à 9, **caractérisé en ce que** des services de communication destinés à la transmission des objets de média sont utilisés l'un après l'autre, parallèlement et/ou au moins partiellement l'un après l'autre et/ou parallèlement.

11. Procédé selon l'une des revendications 1 à 10, **caractérisé par** SMS, SMS par IP, MMS, MMS par IP, Instant Messaging (IM), e-mail et/ou transfert par IP en tant que service de communication du réseau de télécommunication (N).

12. Procédé selon l'une des revendications 1 à 11, **caractérisé par** des images, des vidéos, des textes, des documents, des URLs et/ou des messages en tant que objet de média.

13. Terminal (S, E1, E2) pour l'utilisation dans un réseau de télécommunication (N) tel qu'un réseau radio mobile selon un standard de réseau radio de GSM, de GPRS et/ou de UMTS et/ou un réseau IP,
**caractérisé en ce que**
celui-ci est configuré et/ou adapté à exécuter un procédé selon l'une des revendications 1 à 12.
